# EUROPEAN PATENT APPLICATION

(11) **EP 4 841 882 A1**
(43) Date of publication of application: **18.11.2026**
(21) Application number: 25305703.8
(22) Date of filing: 16.05.2025
(51) Int. Cl.: H02M 7/162, H02M 7/219, H02M 7/5395, H02M 1/12, H02M 1/00

(54) **APPARATUS FOR COMPENSATING A LEAKAGE CURRENT**

(71) Applicant: SCHNEIDER ELECTRIC INDUSTRIES SAS, 92500 Rueil-Malmaison (FR)
(72) Inventor: LEIBL, Thomas, 77960 Seelbach (DE)
(74) Representative: Manitz Finsterwald Patent- und Rechtsanwaltspartnerschaft mbB

(57) **Abstract**

The invention is directed at an apparatus for compensating a leakage current between a converter for rectifying an AC supply voltage provided by an AC power supply, and an inverter for converting the rectified voltage to an AC voltage and for providing the AC voltage to a load, comprising: a control unit for controlling the converter, wherein the control unit is configured to superimpose an input voltage of the converter with a compensation voltage such that the leakage current is at least partially compensated.

## Description

The present invention is directed at an apparatus and a method for compensating a leakage current.

Electrical motor control systems commonly employ three-phase power circuits comprising multiple electronic switches, enabling each motor winding to be alternately connected to the positive or negative potential of a DC voltage. Such circuits, known as inverters, convert DC voltage into AC voltage to drive the motor. However, during inverter operation, rapid switching between the positive and negative DC potentials induces voltage changes in the motor cables, resulting in radiated electromagnetic interference (EMI). To mitigate these disturbances, motor cables are typically shielded, and the system incorporates electromagnetic compatibility (EMC) filters.

In conventional designs, the DC voltage for the inverter is derived from the mains supply through rectification, establishing a connection between the DC bus, mains, and ground. The parasitic capacitance between the motor cable wires and the shielding generates capacitive currents during each switching cycle. These currents flow to ground and back to the inverter via the mains connection, creating high-frequency disturbances that EMC regulations strictly limit. To manage this, Y-capacitors are often used to provide a direct return path from ground to the DC bus, while a common-mode choke is added to suppress parallel current paths through the mains.

Despite these measures, several challenges persist. The current through the Y-capacitors generates voltage steps, which in turn induce peak currents in the common mode choke. For large systems, such as those involving multiple synchronized motor inverters with long cable lengths, these currents increase significantly, leading to higher voltage steps and larger choke sizes to prevent saturation. Additionally, synchronization of motor inverters can cause capacitive currents to align temporally, further compounding these effects.

Furthermore, the increasing adoption of active power supplies (APS) with controllable switches introduces further challenges. These supplies usually operate at higher switching frequencies, which reduces filter size requirements on the mains side but contrasts with the lower switching frequencies of motor inverters. This disparity exacerbates challenges in managing leakage currents and the associated voltage steps across system components.

It is an object of the invention to address the foregoing issues.

This object is satisfied by the subject-matters of claim 1 and claim 15.

A first aspect of the invention is directed at an apparatus for compensating a leakage current between a converter for rectifying an AC supply voltage provided by an AC power supply, for example a mains supply net, and an inverter for converting the rectified (DC) voltage to an AC voltage and for providing the AC voltage to a load, comprising:
a control unit for controlling the converter, wherein the control unit is configured to superimpose an input voltage of the converter with a compensation voltage such that the leakage current is at least partially compensated.

The invention is based on the idea that the operation of an, in particular already existing, converter may be controlled in such a manner that a leakage current between the inverter and converter is compensated. In other words, the control voltage, i.e. the input voltage, of the converter may be adjusted to consider the leakage current. Preferably, the compensation voltage is determined based on the leakage current. The converter, in particular a rectifier, may comprise multiple switches to convert the AC supply voltage into a rectified voltage signal. The converter may be any conventional converter. The input voltage of the converter may control the switching mechanism of the switches of the converter and thereby reduce or compensate the leakage current. Advantageously, the invention can be implemented with conventional converters. Particularly, the compensation voltage is generated by the converter itself.

The leakage current may be a capacitive parasitic current caused by e.g. a parasitic capacitance between cable wires of a load, e.g. a motor, and a corresponding shield. With every switching of the converter switches and/or the inverter switches such capacitive currents may flow along a specific current path of the apparatus. The parasitic current may flow via ground and the AC power supply back to an intermediate circuit between the converter and the inverter. The leakage current may also be a current induced in a common mode choke which is caused by voltage steps on the DC-bus between the inverter and the converter.

By simply adjusting the operation of the converter such that the leakage current is reduced, leakage current compensation is accomplished in an easy manner. E.g. existing systems, i.e. the associated control units of the existing systems, may be easily adjusted without the need to introduce any physical changes to the apparatus. In fact, the control unit may be configured to provide a corresponding input voltage to the converter. Especially, the requirements for certain circuit components may be minimized as stress on the apparatus due to leakage currents may be minimized. For example, components used for reducing leakage currents, e.g. common mode chokes or EMC chokes, may be reduced in size. The leakage current may for example be reduced by at least 20%, 30% or 50% compared to an apparatus without a compensation according to the invention.

The AC power supply may be a mains power supply providing e.g. 400 VAC. The AC power supply voltage may be directly provided to the converter or may be modulated or modified according to the specific requirements of the converter. For example, the control unit may be configured to modulate the AC power supply accordingly. The input voltage, i.e. the AC power supply voltage or the modulated AC power supply voltage, may then be superimposed with a compensation voltage such that the leakage current is at least partially compensated. The converter converts the superimposed input voltage into a DC voltage which may be supplied to the inverter via an intermediate circuit, i.e. a DC-Bus. The inverter subsequently may convert the DC voltage into an AC voltage suitable for supplying a load, e.g. a motor, with power. Hence, the converter and inverter may cooperatively function as a frequency inverter. The load may be an electrical motor, e.g. a three-phase electrical motor, or a plurality of electrical motors which may be connected in parallel.

Further embodiments of the invention may be found in the description, the subclaims and the drawings.

According to a first embodiment the compensation voltage is configured to reduce a voltage across a compensation choke arranged between the converter and the AC power supply. The compensation choke may be a filter, e.g. an inductance coil, for reducing leakage currents. The compensation choke may e.g. be a common mode choke used to reduce or suppress common mode current within the apparatus. The common mode choke may particularly prevent current from flowing to the AC power supply. The current flowing through the compensation choke may be dependent on the choke size and the voltage across the compensation choke. By reducing the voltage lying on the compensation choke by means of the compensation voltage the resulting current flowing through the choke may be reduced. Hence, the requirements regarding the choke size may be minimized resulting in a smaller sized choke and a compact apparatus structure.

According to an embodiment the compensation voltage is configured to counteract a voltage of at least one leakage capacitor arranged within the intermediate circuit between the converter and the inverter. For example, there may be at least one leakage capacitor arranged within the intermediate circuit between the converter and the inverter in order to reduce or prevent leakage currents from flowing back from the inverter to the AC power supply. The leakage capacitor may be a Y-capacitor and may have a high dielectric strength. The capacitor may be connected between ground and a line of the intermediate circuit, i.e. the DC-bus. Therewith capacitive currents may close its path from ground back to the intermediate circuit without reaching the AC power supply. Hence, the corresponding capacitive currents may be reduced.

However, due to the switching of the inverter switches the voltage of the leakage capacitor may comprise steps which may affect the voltage of the compensation choke, e.g. a common mode choke. In fact, the voltage of the leakage capacitor may also lie on the compensation choke due to a common voltage loop. With every switching process within the inverter and/or the converter there may be a respective voltage step and a resulting leakage current flowing through the compensation choke. The magnitude of the voltage step may increase with increasing cable length. Especially, when the load increases, e.g. when multiple motors are connected in parallel to the same power supply, the voltage step and the corresponding current become high. Accordingly, the compensation choke must be sized to not saturate at the resulting current peaks.

Therefore, the control unit may be configured to counteract the voltage of the leakage capacitor and/or the compensation choke in order to reduce the voltage across the compensation choke reducing the resulting current peaks flowing through the compensation choke. In other words, the compensation voltage is introduced into a voltage loop comprising the voltage of the leakage capacitor and the voltage of the compensation choke in order to reduce the voltage across the compensation choke. Hence, the requirements regarding the compensation chokes, in particular the size of the compensation chokes, may be decreased making it possible to use smaller sized compensation chokes.

According to an embodiment the compensation voltage is a voltage superimposed to one or more phases of the input voltage. Particularly, the compensation voltage can be superimposed to all phases of the input voltage, thus being a common mode voltage. For example, the input voltage is a three-phase voltage which is inputted to the converter to control the switching mechanism of the converter. The input voltage may be the AC power supply voltage. Alternatively, the AC power supply voltage may be modulated in order to satisfy the input requirements of the converter. Each phase of the modulated input voltage may correspond to a sinusoidal fundamental frequency voltage. The common mode voltage may be added to any phase of the input voltage accordingly.

According to an embodiment the control unit is configured to adjust a frequency of the compensation voltage to a switching frequency of the inverter and/or a frequency of the leakage capacitor voltage. The compensation voltage may for example be a PWM signal. The frequency of the compensation voltage may be substantially equal to the switching frequency of the inverter and/or the frequency of the leakage capacitor voltage. Usually the frequency of the leakage capacitor is based on, preferably equal to, the switching frequency of the inverter. Hence, the compensation voltage is effectively, preferably only, compensating leakage currents caused by the inverter, i.e. the inverter switching mechanism. In other words, applying the compensation voltage may have substantially no effect on leakage currents caused by the converter. Additionally or alternatively, the compensation voltage may be adjusted to the switching cycles of the inverter. The steps of the compensation voltage may for example correspond to the switching times of the inverter.

The size of filters, e.g. compensation chokes, for reducing leakage currents such as common mode currents is dependent on the switching frequency of the respective component, e.g. the converter or inverter. Generally, the size of these chokes reduces with increase of the switching frequency. Therefore, in many applications a main issue is the compensation of leakage currents caused by the inverter as the inverter may be operating using a significantly lower switching frequency than the converter. The converter may for example be part of an APS (active power supply) having a switching frequency which may be between 20 kHz and 100 kHz, preferably 64 kHz. In contrast, the switching frequency of the inverter such as a motor inverter may be lower as higher switching frequencies on a motor inverter are not beneficial. The inverter may e.g. have a switching frequency between 2 kHz and 20 kHz. The switching frequency of the inverter may be at least 4 to 50 times smaller than the switching frequency of the converter, e.g. 4 times, 25 times or 40 times. Thus, leakage currents caused by the switching of the converter may be easily suppressed by a respective choke which may be sized comparatively small. At the same time the control unit may be configured to apply the compensation voltage to the input voltage of the converter such that the leakage current caused by the inverter may also be compensated sufficiently. Hence, the used compensation choke can be of small size.

The control unit may comprise a filter, in particular a low pass filter or a bandpass filter, for adjusting the frequency of the compensation voltage, wherein the filter may block frequencies other than the switching frequency or the frequency operating range of the inverter.

According to an embodiment the control unit is configured to generate the compensation voltage based on intrinsic system parameters. The intrinsic system parameters may be a cable length of the motor, an intrinsic capacity of the leakage capacitor, a parasitic capacitance, e.g. between motor wires and a shield, the switching frequency of the inverter or any other suitable parameter. The compensation voltage may be determined based on a predetermined relation between the compensation voltage and the intrinsic system parameters. The compensation voltage may e.g. be calculated based on a mathematical equation or a reference table.

According to an embodiment the control unit is configured to generate the compensation voltage based on a detection of the leakage capacitor voltage. The leakage capacitor voltage may for example be measured by a respective voltage detection device and provided to the control unit. The compensation voltage may be directly determined based on the measured leakage capacitor voltage. In particular, the control unit may be configured to generate the compensation voltage by inverting the leakage capacitor voltage and adjusting the magnitude of the compensation voltage. The magnitude of the compensation voltage may be determined based on the leakage current or any other suitable parameter.

According to an embodiment the control unit is configured to generate the compensation voltage based on a detection of the leakage current. For example, the leakage current may be measured using a current detection device, e.g. a shunt resistor. The leakage current may be measured in the vicinity of the leakage capacitor, in the vicinity of a compensation choke and/or the lines between the inverter and the load. The control unit may be configured to receive the measured leakage current and control the current to zero by applying the compensation voltage.

According to an embodiment the control unit is configured to determine a magnitude of the compensation voltage based on the detected leakage current. The compensation voltage may comprise a square wave signal having the same frequency as the leakage capacitor voltage. The amplitude and/or the duty cycle of the square wave signal may be determined based on the leakage current. The measured leakage current may be rectified and filtered using a low pass filter or a band pass filter. The filter may be configured to filter out frequencies which do not correspond to a predetermined frequency range. The predetermined frequency range may comprise all frequencies equal to or below the frequency of the inverter switching frequency. Hence, leakage currents caused by the converter switching may be neglected. Based on the filtered current signal the controller may determine a magnitude of the compensation voltage which is superimposed to the input voltage of the converter.

It is to be noted that the control unit may be configured to generate the compensation voltage based any of the preceding metrics or a combination of them.

According to an embodiment the control unit is configured to generate a PWM signal for controlling the converter based on the superimposed input voltage. The PWM signal may be generated by comparing the superimposed input voltage to a triangular wave signal. The triangular wave signal and the superimposed input voltage may be compared using a comparator. The result of the comparison may be the PWM signal. The pulse width (duty cycle) of the PWM signal may be proportional to the amplitude of the superimposed input voltage. The switches of the converter may be turned on and off by the PWM signal to regulate the converter's output voltage.

According to an embodiment the load comprises a plurality of electrical motors, wherein each electrical motor is connected to the converter via a respective inverter and a respective intermediate circuit. The switching cycles of the inverters may be synchronized. Due to the synchronization the leakage current flows at the same time for all subsystems. Hence, leakage currents in a corresponding system may sum up and the voltage step on the leakage capacitor may become larger. In such systems the apparatus according to the invention may be particularly beneficial as the higher voltage step may be addressed dynamically.

According to an embodiment the converter is a 2-level or a 3-level converter. The 2-level converter may comprise 6 switches generating 2 voltage levels. The 2-level converter may be used in simpler switching arrangements due to its simpler structure. The 3-level converter may comprise 12 switches and therefore has a more complex structure. However, the 3-level converter may provide a better quality of the output voltage signal with lower harmonics. Hence, the requirements on the filter components may be reduced. The 3-level converter may particularly be suitable for complex applications such as large motor drives.

Another aspect of the invention is directed at a method for compensating a leakage current between a converter configured to rectify an AC voltage provided by an AC power supply, and an inverter configured to convert the rectified voltage to an AC voltage and provide the AC voltage to a load, wherein:
an input voltage of the converter is superimposed with a compensation voltage such that the leakage current is at least partially compensated.

According to an embodiment an artificial neural (AI) network is used to determine the compensation voltage or at least a magnitude of the compensation voltage. The AI network may be configured to analyze input signals representative of system parameters, such as the leakage current, switching states of the inverter, and cable shield characteristics, and to output the compensation voltage or a magnitude of the compensation voltage that counteracts undesired common-mode or leakage effects. To enable the AI network to accurately predict the compensation voltage, it is subjected to a supervised training process using a dataset derived from system simulations and experimental measurements. The dataset includes labeled instances of input signals and corresponding target compensation voltages required to minimize leakage currents under various operational conditions, such as differing motor cable lengths, switching frequencies, and environmental influences. Once trained, the AI network is integrated into the control unit to dynamically adapt the compensation voltage in real-time, optimizing system performance and ensuring compliance with electromagnetic compatibility standards.

The explanations of the apparatus apply accordingly to the method, in particular with regard to advantages and embodiments.

It should be noted that any combination of the above embodiments is possible as long as this has not been explicitly excluded.

In the following, the invention is illustrated by way of example with reference to the drawings. It shows:
- Fig. 1: a schematic representation of an apparatus for compensating a leakage current
- Fig. 2: a simplified active power supply (APS) according to the state of the art
- Fig. 3: a diagram illustrating a common mode voltage signal and a resulting common mode current signal
- Fig. 4: a circuit diagram of an apparatus for compensating a leakage current
- Fig. 5a, b: a diagram illustrating a common mode current signal without and with considering common mode currents caused by a motor inverter
- Fig. 6: a schematic representation of a control unit for controlling a converter
- Fig. 7a, b, c: a diagram of the input voltage signal of the converter
- Fig. 8: a common mode voltage signal and a compensation voltage signal
- Fig. 9: a diagram comprising signals for rectifying the inverter current
- Fig. 10: a diagram illustrating a compensated common mode current
- Fig. 11: a circuit diagram illustrating an apparatus with multiple electric motors as loads
- Fig. 12a, b: a circuit diagram of a 2-level converter and a 3-level converter

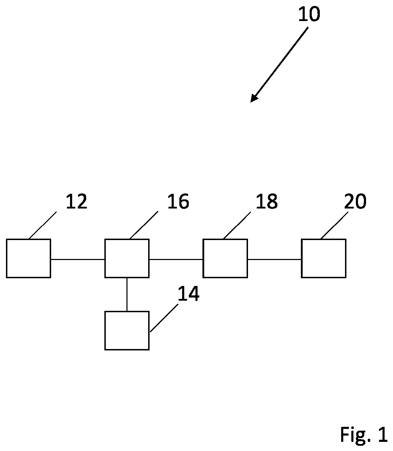

Fig. 1 illustrates an apparatus 10 for compensating a leakage current between a converter 16 for rectifying an AC supply voltage provided by an AC power supply 12, and an inverter 18 for converting the rectified voltage to an AC voltage and for providing the AC voltage to a load 20. The apparatus 10 further comprises a control unit 14 for controlling the converter 16, wherein the control unit 14 is configured to superimpose an input voltage of the converter 16 with a compensation voltage such that the leakage current is at least partially compensated.

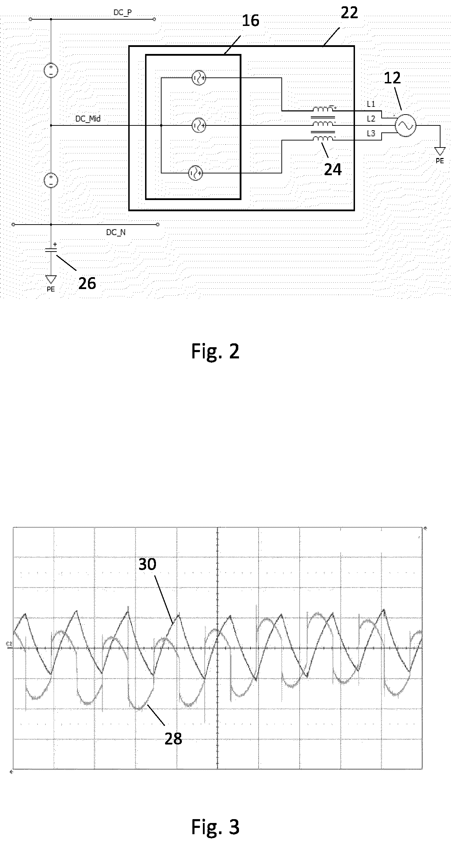

Fig. 2 illustrates a simplified active power supply (APS) 22 according to the state of the art. The APS 22 comprises a filter 24 and a converter 16 which is configured to convert a three-phase AC supply voltage into a DC voltage which may be provided to an inverter 18 such as a motor inverter, which is not shown in Fig. 2, via a DC-bus. By only considering a frequency range lower than the converter switching frequency the converter 16 can be simplified to the idealized representation shown in Fig. 2. This may be valid for low frequency ranges which are significantly lower than the switching frequency. The sum of the phases of the three AC power supply 12 voltages may be zero. The modulation of the converter 16 switches may further be in a way that each phase corresponds to a sinusoidal fundamental frequency voltage. The sum of the three converter voltages may also be zero to avoid circulating currents. A respective compensation choke 24, e.g. an EMC choke is further arranged between the converter 16 and the AC power supply 12 in order to suppress electromagnetic interferences (EMI), i.e. leakage currents having a predetermined frequency component. The compensation choke 24 is particularly designed to suppress leakage currents caused by the switching mechanism of the converter 16. At a low-level line of the DC-bus a Y-capacitor 26 may be arranged in order to prevent current to flow back from the inverter 18 to the AC power supply 12. It is to be understood that in the example described, the Y-capacitor 26 is connected to the low-level line of the DC-bus. However, typically a Y-capacitor connected to the high level line (DC+) and another Y-capacitor connected to the low level line (DC-) can be used (this is also valid for the Figures relating to the invention).

Fig. 3 shows a diagram illustrating a signal curve of a common mode voltage 28 and a resulting common mode current 30 typically generated by a motor inverter. The common mode voltage 28 may be a voltage on the Y-capacitor 26 shown in Fig. 2. As illustrated in Fig. 3 with every switching of the inverter switches 27 a voltage step occurs on the Y-capacitor 26. This voltage step lies also on the compensation choke 24. The common mode voltage 28 therefore causes a current flow, i.e. a common mode current 30, in the compensation choke 24, wherein the peak current is determined by the integral of the common mode voltage 28 over time.

In order to efficiently suppress the resulting common mode current 30, an additional common mode choke 32 may be added for each phase which must be sized to not saturate at the resulting peak current. Hence, the peak current determines the core size of the compensation choke 24. Alternatively, the choke 32 could be a differential mode choke in every phase (not shown).

However, the size of such compensation chokes 24, 32 are dependent on the switching frequency of the respective component, e.g. the converter 16 or inverter 18. Generally, the size of these chokes 24, 32 reduces with increase of the switching frequency. While converter devices usually operate at high frequencies, e.g. around 64 kHz, inverters usually work around lower frequencies, e.g. around 8 kHz. Hence, the leakage currents caused by the converter 16 may be reduced by the respective compensation chokes 24, 32 efficiently. However, a main issue is the compensation of leakage currents caused by the inverter 18 as the inverter 18 may be operating using a significantly lower switching frequency than the converter 16 leading to the use of large compensation chokes 24, 32.

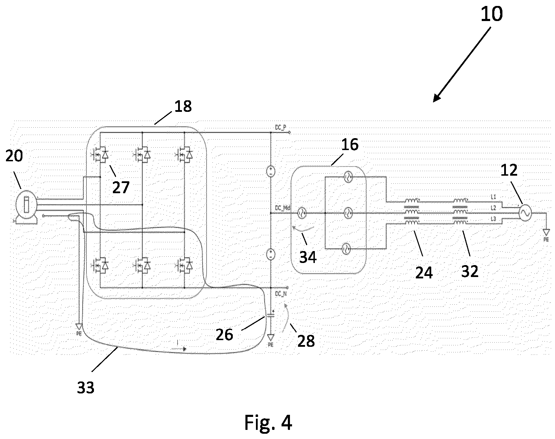

Fig. 4 illustrates a circuit diagram of an apparatus 10 for compensating a leakage current. The apparatus 10 shown in Fig. 4 may be capable of reducing the size of the applied compensation chokes 24, 32 while compensating leakage currents in an efficient way. A loop 33 may cause leakage currents flowing from the inverter 18 to the Y-capacitor 26 during the switching process of the inverter switches 27. With every switching of the inverter switches 27 a voltage step occurs on the Y-capacitor 26 which may cause common mode currents 30. The magnitude of the voltage step may increase with increasing cable length. Therefore, in addition to the apparatus 10 shown in Fig. 2 the apparatus 10 of Fig. 4 comprises the common mode choke 32 for compensating common mode currents 30 caused by the common mode voltage 28. Furthermore, the idealized representation of the converter 16 shows an additional voltage which is a compensation voltage 34 introduced by a control unit 14 which is not shown in Fig. 4. The compensation voltage 34 may be configured to at least partially reduce or compensate the voltage across the common mode choke 32 and/or the compensation choke 24, thereby reducing the common mode current 30. Hence, the compensation voltage 34 may counteract the common mode voltage 28. As a result, the common mode choke 32 may be reduced in size while maintaining the same or having even better compensation characteristics.

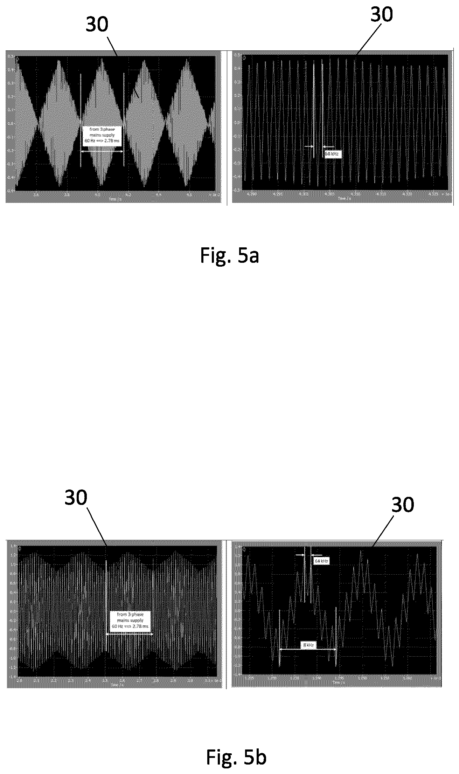

Fig. 5a illustrates a common mode current signal without considering common mode currents 30 caused by a motor inverter 18, i.e. when a motor inverter isn't active, while Fig. 5b illustrates a common mode current signal considering common mode currents 30 (without compensation) when the motor inverter is active. The disturbances are caused by the converter 16.

Comparing the common mode currents 30 of Fig. 5a and 5b is become obvious that, when the motor inverter 18 is active, the common mode currents 30 are becoming higher increasing the requirements on the applied common mode choke 32. In particular, the peak of the common mode current 30 is around +/- 0.5 Ampere without consideration of motor inverter 18. With considering the motor inverter 18 the peak of the common mode current is around +/- 1.2 Ampere. Furthermore, in Fig. 5b the low frequency common mode current caused by the motor inverter 18 is superimposed with the high frequency common mode current caused by the converter 16.

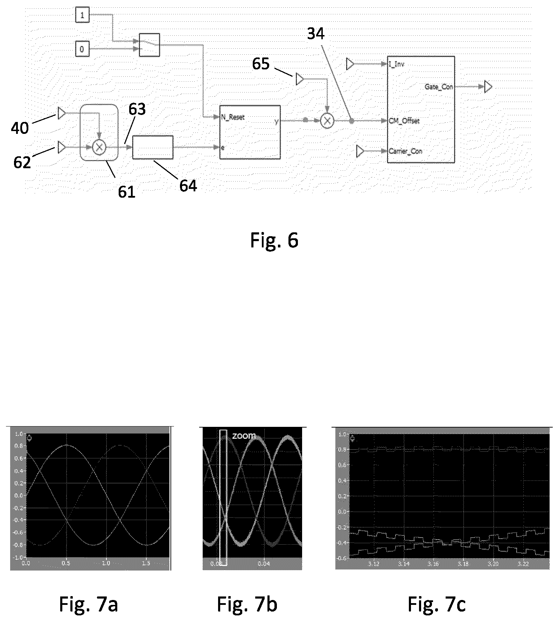

Fig. 6 illustrates a schematic representation of a control unit 14 for controlling a converter 16. The control unit 14 receives the common mode current 30 which may be detected by a corresponding current sensor as a signal 40. The control unit 14 is configured to rectify the detected common mode current 40 by means of a rectifier 61, particularly a synchronous rectifier, and shift it by a switching time offset 62 of the motor inverter 18, i.e. by 90 degrees. The switching time offset 62 is a signal from the PWM of the motor inverter 18 and is used to allow for a synchronous rectification. In a further step the rectified common mode current signal 63 is filtered using a low pass filter 64, wherein the low pass filter 64 is configured to block higher frequencies, so that the switching frequency of the motor inverter 18 (and higher frequencies) are filtered out. Hence, leakage currents caused by the converter switching may be suppressed. Based on the filtered current signal the control unit 14 determines a magnitude of the compensation voltage 34 which is multiplied by a square wave signal 65 having the frequency of the common mode voltage 28 which may comprise the frequency of the PWM signal of the motor inverter 18. The square wave signal 65 may be inverted with respect to the common mode voltage 28 in order to effectively suppress the common mode voltage 28. The resulting compensation voltage 34 is added to the input voltage of the converter 16, thereby reducing the common mode current 30 flowing through the common mode choke 32.

Fig. 7a to 7c show the input voltage signal of the converter 16 before and after adding the compensation voltage 34. As already described, each phase of the AC power supply voltage may be modulated in order to satisfy the input requirements of the converter 16. Each phase of the modulated input voltage signal corresponds to a sinusoidal fundamental frequency voltage which is shown in Fig. 7a. As shown in Fig. 7b the compensation voltage may be added to any phase of the input voltage accordingly. Fig. 7c shows a zoomed-in portion of Fig. 7b.

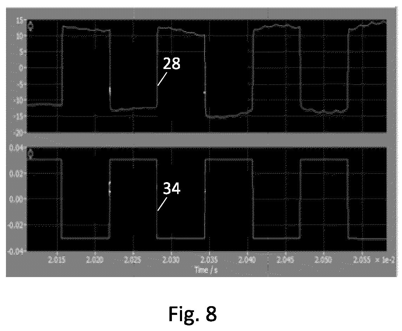

Fig. 8 shows the common mode voltage signal and the compensation voltage signal. As apparent from Fig. 8, the compensation signal 34 is a square wave signal which is inverted with respect to the common mode voltage 28, i.e. the compensation voltage signal has a high value when the common mode voltage signal is low and vice versa, in order to effectively suppress the common mode voltage 28. The amplitude of the compensation voltage 34 may be determined based on the current mode current 30.

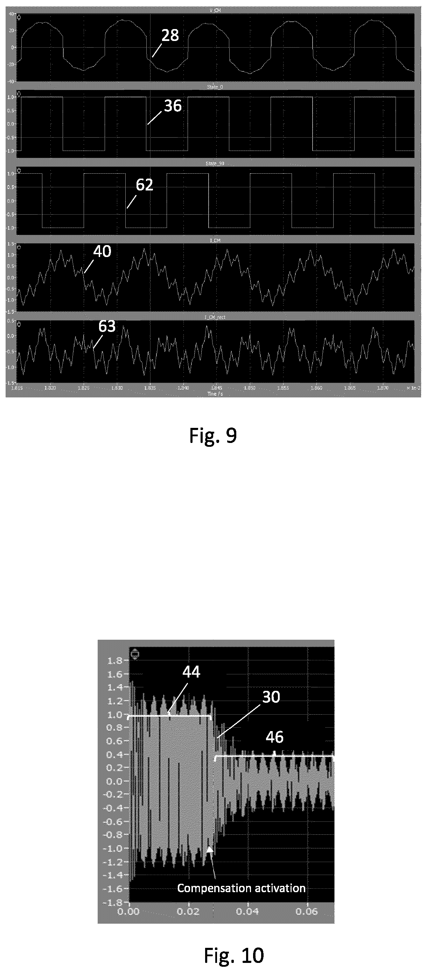

Fig. 9 shows a diagram illustrating the signal process for rectifying a common mode current 30. The first graph/row (signal 28) of Fig. 9 shows the common mode voltage 28 on the Y-capacitor 26. The second graph shows a signal 36 derived from the PWM generation of the motor inverters 18. The third graph (signal 62) shows the signal 36 from before shifted by 90°. The fourth graph shows the detected common mode current signal 40. It has to be noted that the common mode current signal 40 represents the common mode current which is shifted (in comparison to the first graph) by approximately 90° by the inductance it is flowing through. The fifth graph shows the synchronous rectified common mode current signal 63 which is generated by multiplying the PWM signal 36 of the third graph with the detected common mode current signal 40 of the fourth graph. By this multiplication the negative half of the common mode current is "flapped" to the positive side (negative current multiplied by -1 results in a positive value). This rectified voltage can then be low pass filtered to yield a measure for the magnitude of the common mode current.

Fig. 10 shows a diagram illustrating a compensated common mode current 30. As shown in Fig. 10 the peaks of the common mode current before activating the compensation 44 is around 1.2A, while the peaks of the common mode current after compensation 46 is around 0.5A showing that the common mode currents 30 caused by the inverter 18 are substantially compensated.

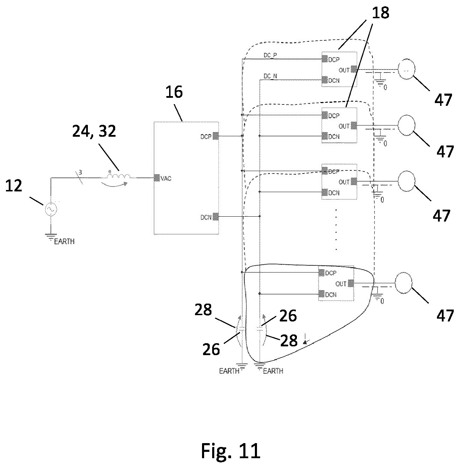

Fig. 11 shows a circuit diagram illustrating an apparatus 10 with multiple electric motors 47 as loads. The switching cycles of the motor inverters 18 are synchronized to achieve precise position control. This may be crucial in applications involving coordinated motion of multiple motors 47. Each switching event of a motor inverter 18 generates a capacitive current. When the switching cycles are synchronized across all axes, these capacitive currents occur simultaneously, resulting in their summation. This simultaneous flow of capacitive currents causes a larger voltage step across the Y-capacitors 26. The control unit 14 may therefore adjust the compensation voltage accordingly to reduce the common mode current 30 on the choke 24, 32.

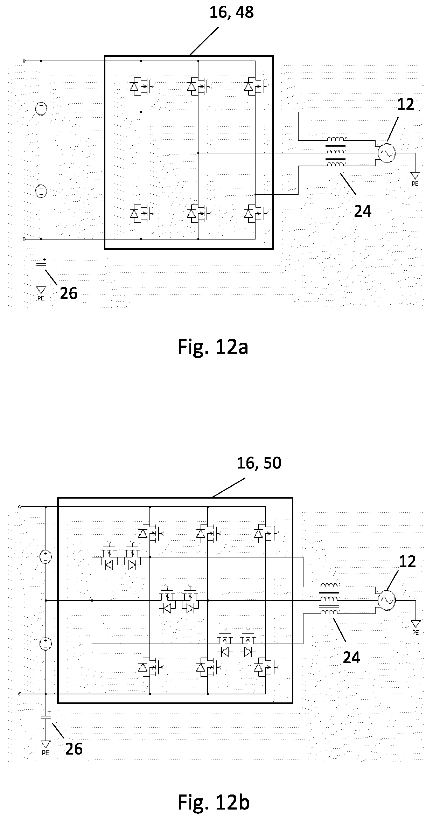

Fig. 12a shows an exemplary APS having a 2-level 48 converter and Fig. 12b shows an exemplary APS 22 having 3-level converter 50 according to the state of the art. The respective APS 22 does not include any control unit 14 according to the invention in order to superimpose an input voltage of the converter 16 with a compensation voltage. However, the invention may be applied to such conventional APS's 22, e.g. by integrating the control unit 14 into the respective system.

### Reference numerals

- 10: apparatus
- 12: AC power supply
- 14: control unit
- 16: converter
- 18: inverter
- 20: load
- 22: APS
- 24: compensation choke
- 26: Y-capacitor
- 27: inverter switches
- 28: common mode voltage
- 30: common mode current
- 32: common mode choke
- 33: loop
- 34: compensation voltage
- 36: PWM signal
- 40: detected common mode current
- 44: common mode current before compensation
- 46: common mode current after compensation
- 47: motor
- 48: 2-level converter
- 50: 3-level converter
- 61: rectifier
- 62: switching time offset
- 63: rectified common mode current signal
- 64: low pass filter
- 65: square wave signal

## Claims

1. Apparatus (10) for compensating a leakage current between a converter (16) for rectifying an AC supply voltage provided by an AC power supply (12), and an inverter (18) for converting the rectified voltage to an AC voltage and for providing the AC voltage to a load (20), comprising:
a control unit (14) for controlling the converter (16), wherein the control unit (14) is configured to superimpose an input voltage of the converter (16) with a compensation voltage (34) such that the leakage current is at least partially compensated.

2. Apparatus (10) according to claim 1,
wherein the compensation voltage (34) is configured to reduce a voltage across a compensation choke (24) arranged between the converter (16) and the AC power supply (12).

3. Apparatus (10) according to claim 1 or 2,
wherein the compensation voltage (34) is configured to counteract a voltage of a leakage capacitor (26) arranged within the intermediate circuit between the converter (16) and the inverter (18).

4. Apparatus (10) according to any of the preceding claims,
wherein the compensation voltage (34) is a voltage superimposed to one or more of the phases of the input voltage.

5. Apparatus (10) according to any of the preceding claims,
wherein a frequency of the compensation voltage (34) is adjusted to a switching frequency of the inverter (18) and/or a frequency of the leakage capacitor voltage.

6. Apparatus (10) according to any of the preceding claims,
wherein the control unit (14) is configured to generate the compensation voltage (34) based on intrinsic system parameters.

7. Apparatus (10) according to any of the preceding claims,
wherein the control unit (14) is configured to generate the compensation voltage (34) based on a detection of the leakage capacitor voltage.

8. Apparatus (10) according to any of the preceding claims,
wherein the control unit (14) is configured to generate the compensation voltage (34) based on a detection of the leakage current.

9. Apparatus (10) according to any of the preceding claims,
wherein the control unit (14) is configured to determine a magnitude of the compensation voltage (34) based on the leakage current.

10. Apparatus (10) according to any of the preceding claims,
wherein the control unit (14) is configured to generate a PWM signal for controlling the converter (16) based on the superimposed input voltage.

11. Apparatus (10) according to any of the preceding claims,
wherein the load (20) comprises a plurality of electrical motors, wherein each electrical motor is connected to the converter (16) via a respective inverter (18) and a respective intermediate circuit.

12. Apparatus (10) according to any of the preceding claims,
wherein the converter (16) is a 2-level or 3-level converter (16).

13. Method for compensating a leakage current between a converter (16) configured to rectify an AC voltage provided by an AC power supply (12), and an inverter (18) configured to convert the rectified voltage to an AC voltage and provide the AC voltage to a load (20), wherein:
an input voltage of the converter (16) is superimposed with a compensation voltage (34) such that the leakage current is at least partially compensated.

14. Method according to claim 13,
wherein an artificial neural network is used to determine the compensation voltage (34) or at least a magnitude of the compensation voltage (34).
